# EUROPEAN PATENT SPECIFICATION

(11) **EP 1 431 173 B1**
(45) Date of publication and mention of the grant of the patent: **29.10.2008**
(21) Application number: 03027783.4
(22) Date of filing: 03.12.2003
(51) Int. Cl.: B62M 27/02

(54) **Snow vehicle**
Schneefahrzeug
Véhicule des neiges

(30) Priority: 20.12.2002 JP 2002369858
(43) Date of publication of application: 23.06.2004
(73) Proprietor: Yamaha Hatsudoki Kabushiki Kaisha, Iwata-shi, Shizuoka 438-8501 (JP)
(72) Inventor: Haruna, Kaoru, Iwata-shi Shizuoka-ken 438-8501 (JP)
(74) Representative: Grünecker, Kinkeldey, Stockmair & Schwanhäusser Anwaltssozietät

(56) References cited:
- WO-A-95/17327
- US-A- 3 504 752
- US-B1- 6 311 798

## Description

The present invention relates to a snow vehicle having a pair of right and left steering skis according to the preamble of independent claim 1. Such a snow vehicle can be taken from the prior art document WO 95/17327. Said document teaches an assembly for controlling the track width of steering skis in a track-belt-driven motorized snowmobile. Said snowmobile comprises a front axle/tie-rod with the steering skis attached to both ends thereof. The length of the front axle/tie-rod can be controlled in a stepless manner and the assembly includes an actuator for the length control of the front axle/tie-rod.

A further snow vehicle having a pair of right and left steering skis, as it is e.g. known from US Patent No. 6,354,391B1, has a pair of right and left steering skis at a front part of a body frame and a circular track belt at a rear part of the body frame. Driving the track belt with an engine and rotating the right and left steering skis to the right or left with a steering handle allows the snow vehicle to run freely on snow.

It is thought that there is a demand for a snow vehicle which can be used conventionally as well as for sport riding and thereby requiring some skills to ride such that the rider can find pleasure in riding on a course specifically designed for sport riding.

It is, therefore, an object of the present invention to provide a snow vehicle which allows a rider to adapt running stability according to the riding situation and the rider's preference.

For a snow mobile of the above kind this objective is solved in an inventive manner by the features of independent claim 1. Preferred embodiments are laid down in the dependent claims.

Preferably, said distance is adjustable in at least two levels, preferably to an arbitrary value.

According to a preferred embodiment, such a snow mobile comprises a steering mechanism which can rotate the right and left steering skis equally to the right or left in synchronization with rotational displacement of a steering handle to the right or left even when the distance between the right and left steering skis has been adjusted by the ski distance adjusting mechanism.

According to an embodiment of the snow vehicle, the ski distance adjusting mechanism has a cylinder mechanism for adjusting the distance between the right and left steering skis via a bell crank mechanism, wherein the steering mechanism absorbs the displacements of the right and left skis adjusted by the ski distance adjusting mechanism and transmits the rotational displacement of the steering handle to the right and left steering skis equally.

Moreover, the ski distance adjusting mechanism comprises rod members secured to the right and left steering skis, individually, a driving arm rotatably disposed between the right and left steering skis and connected to the rod members via link members, and a cylinder mechanism for rotating the driving arm, wherein the steering mechanism comprises ski side arms secured to supporting members for supporting the right and left steering skis, individually, for lateral rotation, a steering intermediate arm connected to the ski side arms via link members, a slider connected to the steering intermediate arm via a link member, and a guide rod secured to a steering arm driven by a steering handle for supporting the slider for movement in the axial direction of the guide rod.

Since there is provided a ski distance adjusting mechanism for adjusting the distance in the vehicle width direction between the right and left steering skis in at least two levels, it is possible, in doing sport riding, that the distance between the right and left steering skis can be reduced to bring the center of gravity up relative to the width of the vehicle and enhance steering response so that the rider can enjoy sport riding. In traveling to and from a sport course, the distance between the right and left steering skis can be increased to bring the center of gravity down relative to the width of the vehicle and improve the running stability and steering stability so that the rider will not get exhausted.

Even after the distance between the right and left skis has been adjusted, the steering operation by the steering mechanism cannot be affected and the right and left steering skis can be rotated to the right or left equally.

Accordingly, since the distance between the right and left steering skis can be adjusted by transmitting the extension or contraction of the cylinder mechanism to the steering skis via the bell crank, the steering mechanism can absorb the displacements of the right and left steering skis adjusted by the ski distance adjusting mechanism, the rotational displacement of the steering handle can be transmitted to the right and left steering skis equally. Thereby, the above effects can be realized.

Moreover, when the driving arm is rotated by the cylinder mechanism, the rotation of the driving arm is converted by link members into movement of the rod members. Thereby, the steering skis are moved in the vehicle width direction and the distance therebetween is adjusted. In the steering mechanism, the movement of the right and left steering skis is transmitted from the ski side arms to the steering intermediate arm via link members to rotate the steering intermediate arm. Thereby, the slider is moved via the link members to absorb the displacement of the steering skis. Then, when the steering handle is rotated, the guide rod secured to the steering arm is rotated, whereby the right and left steering skies are rotated.

Since the distance between the steering skis can be adjusted to wide or narrow as described above, both sport riding and reduction of rider's fatigue can be realized. Also, since the displacement of the steering skis can be absorbed, steering cannot be affected.

Further preferred embodiments are subject to the subclaims.

In the following, the present invention is explained in greater detail by means of an embodiment thereof with reference to the accompanying drawings. Therein:
- Fig. 1: is a side view of a snow vehicle according to an embodiment of the present invention;
- Fig. 2: is a front view of the snow vehicle;
- Fig. 3: is a perspective view of a steering ski supporting mechanism of the snow vehicle;
- Fig. 4: is an exploded perspective view of a center part of a steering mechanism of the snow vehicle;
- Fig. 5: is a plan view of the steering mechanism of the snow vehicle in a wide state;
- Fig. 6: is a plan view of the steering mechanism of the snow vehicle in a narrow state;
- Fig. 7: is a plan view of a ski distance adjusting mechanism of the snow vehicle in a wide state; and
- Fig. 8: is a cross-sectional side view (cross-sectional view taken along the line VIII-VIII in Fig. 7) of the ski distance adjusting mechanism and the steering mechanism of the snow vehicle.

Descriptions will be made of the embodiments of the present invention based on the accompanying drawings.

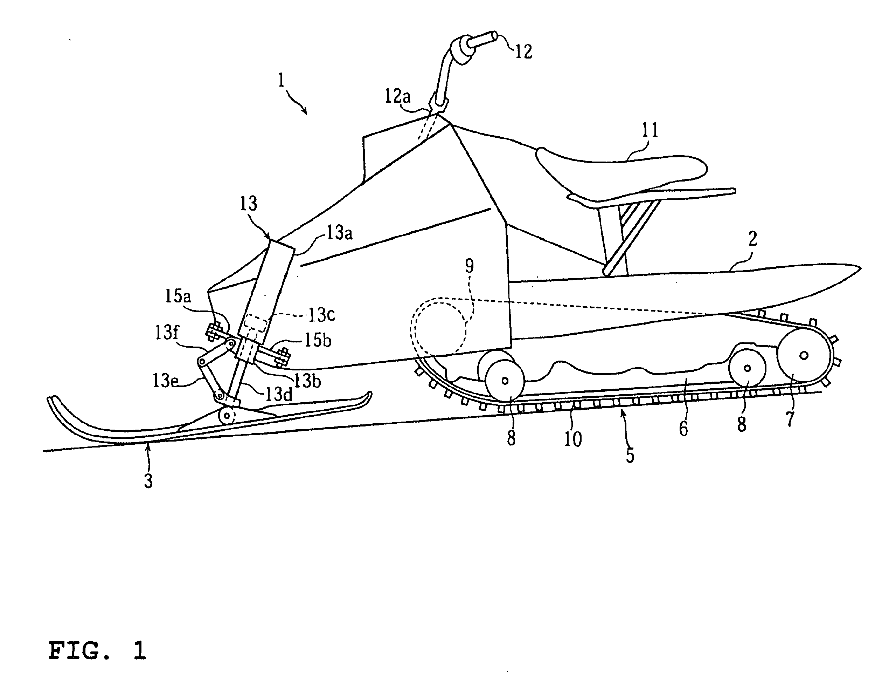

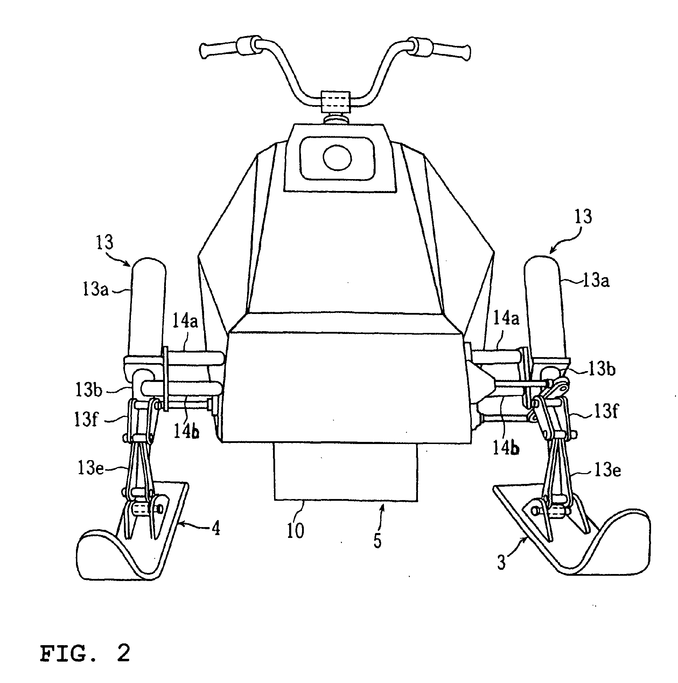

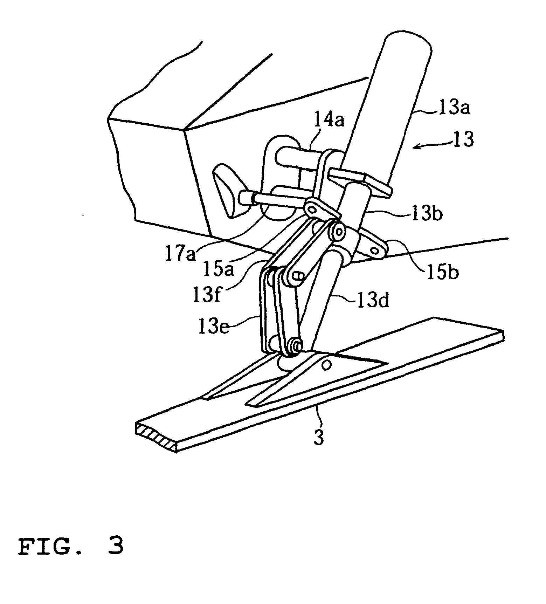

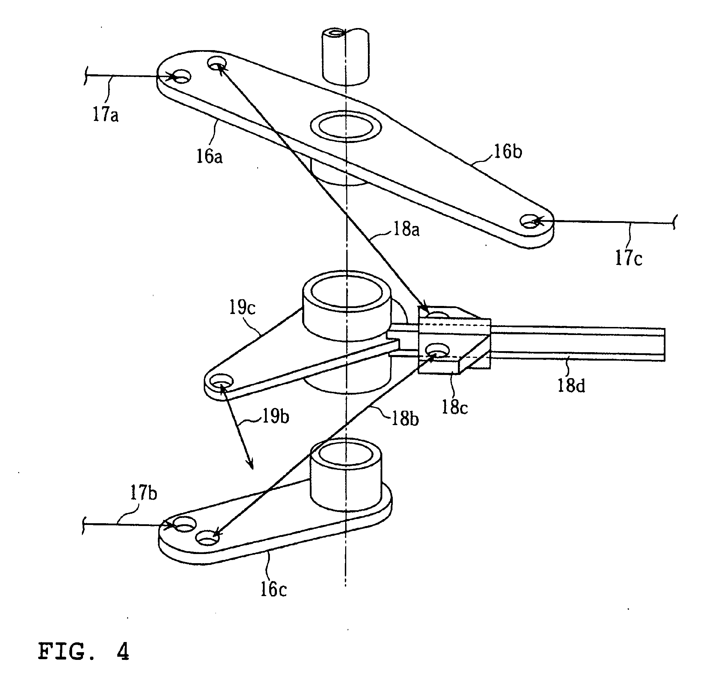

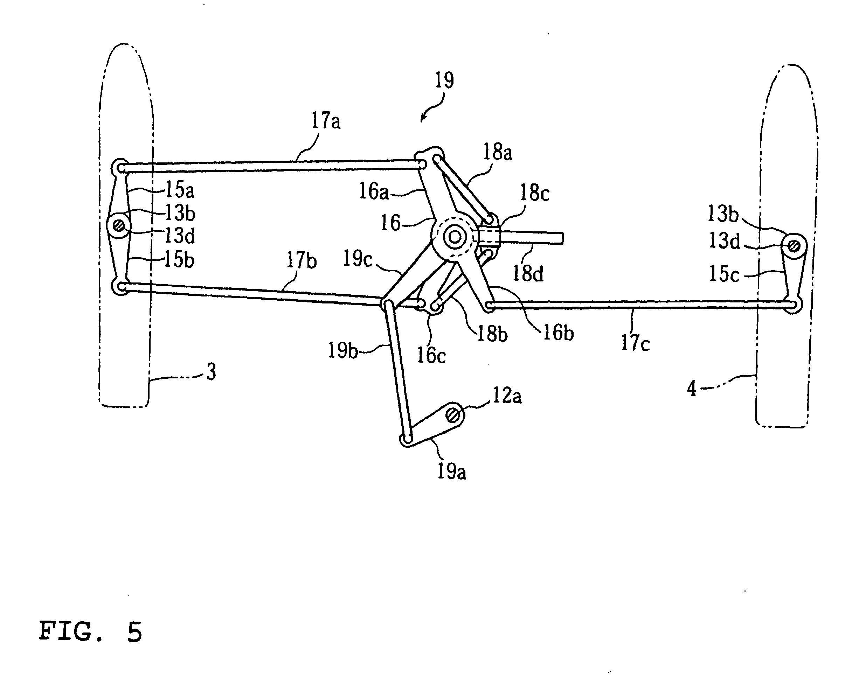

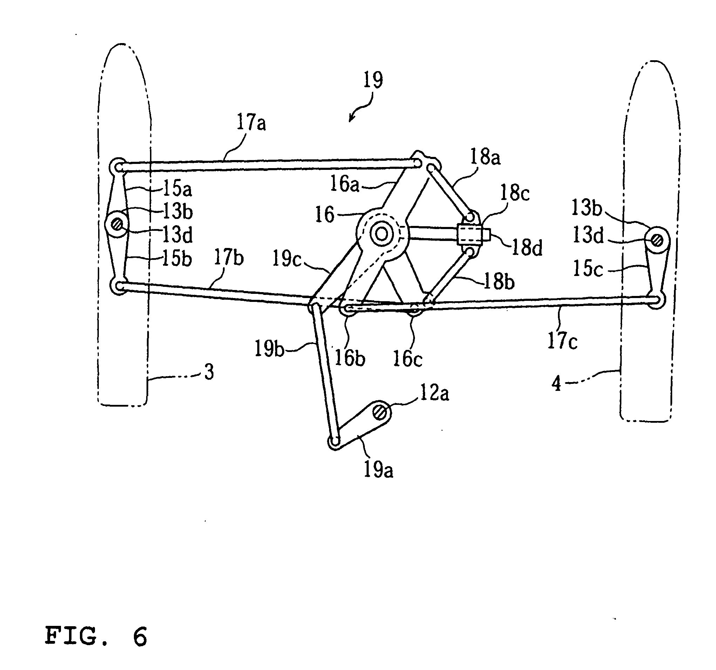

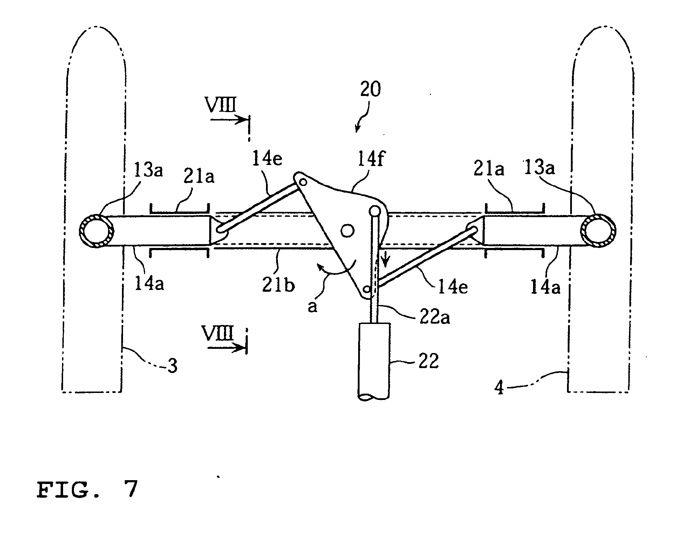

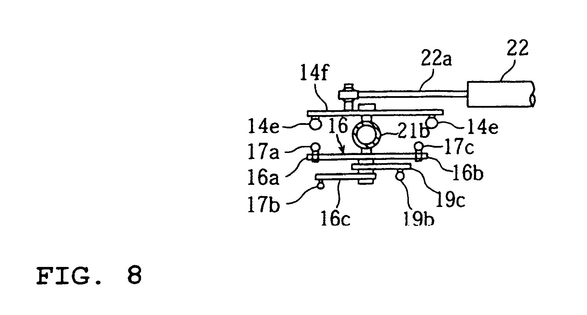

Fig. 1 to Fig. 8 are views for explaining a steering device for a snow vehicle according to an embodiment of the present invention. Fig. 1 and Fig. 2 are a side view and a front view, respectively, of a snow vehicle. Fig. 3 is a perspective view of a steering ski supporting mechanism. Fig. 4 is an exploded perspective view of a center part of a steering mechanism. Fig. 5 is a plan view of the steering mechanism at the time when the distance between steering skis is wide (large). Fig. 6 is a plan view of the steering mechanism at the time when the distance between the steering skis is narrow (small). Fig. 7 is a plan view of a ski distance adjusting mechanism. Fig. 8 is a cross-sectional side view of a center part of the ski distance adjusting mechanism.

In the drawings, designated as 1 is a schematically illustrated snow vehicle comprising a body frame 2, a pair of left and right steering skis 3 and 4 disposed at a front part of the body frame 2 and a driving unit 5 disposed at a rear portion of the body frame 2. The driving unit 5 comprises a slide rail 6 supported by the body frame 2 for vertical swinging movement, and an endless track belt 10 mounted around guide pulleys 7 and 8 and a drive pulley 9. The drive pulley 9 is rotated by an engine (not shown) mounted in front thereof.

A saddle type seat 11 is mounted on an upper rear part of the body frame 2. A steering handle 12 is disposed in front of the seat 11 for lateral rotation. The steering handle 12 has a steering shaft 12a connected to the left and right steering skis 3 and 4 via a hereinafter-described steering mechanism 19.

The left and right steering skis 3 and 4 are supported by left and right telescopic cushion units 13, respectively, for vertical movement and lateral steering movement. More specifically, each of the cushion units 13 has a cylinder 13a secured to ends of upper and lower rod members 14a and 14b extending in the vehicle width direction. Each of the upper rod members 14a is supported by a guide pipe 21 a disposed at a front part of the body frame 2 for sliding movement in the direction of the width of the vehicle. The lower rod members 14b are inserted in a cross pipe 21 b extending in the vehicle width direction at a front part of the body frame 2 and slidably supported by the cross pipe 21 b.

Each of the cylinders 13a has a lower end into which a guide member 13b is inserted for rotation about its axis. A piston 13c is slidably inserted in each cylinder 13a. A piston rod 13d connected to the piston 13c extends through the guide member 13b and protruded downward to the outside thereof. The steering skis 3 and 4 are individually connected to the lower ends of the piston rods 13d. Each guide member 13b and the lower end of each piston rod 13d are connected by a pair of link members 13e and 13f which are folded when the piston rods 13d contract. Thereby, the left and right steering skis 3 and 4 are turned to the right or left by rotating the guide members 13b to the right or left.

The left and right cushion units 13 and 13, by extension, the left and right steering skis 3 and 4 are connected to a ski distance adjusting mechanism 20 for adjusting the distance between the left and right steering skis 3 and 4 to wide (large) or narrow (small). The ski distance adjusting mechanism 20 is constituted as follows. The ski distance adjusting mechanism may adjust the distance between the left and right skis 3 and 4 to an arbitrary value.

As shown in Fig. 7 and Fig. 8, the inside ends of the right and left upper rod members 14a and 14a secured to the right and left cylinders 13a, respectively, are connected to opposite ends of a driving arm 14f via link members 14e. The driving arm 14f is rotatably supported at its center on the cross pipe 21 b. A piston rod 22a of a cylinder mechanism 22 is also connected to the driving arm 14f. By contraction of the piston rod 22a, the left and right steering skis 3 and 4 are moved in the vehicle width direction and the distance therebetween is adjusted to wide or narrow.

The steering mechanism 19 is constituted as follows. A steering shaft arm 19a secured to the steering shaft 12a of the steering handle 12 is connected to a steering arm 19c via a link member 19b. An intermediate arm 16 and a left rear intermediate arm 16c are coaxially disposed above and below, respectively, the steering arm 19c. The arms 19c, 16 and 16c are rotatably supported on a lower side of the cross pipe 21 b.

A left front intermediate arm 16a of the intermediate arm 16 and the left rear intermediate arm 16c are connected to left front and left rear ski side arms 15a and 15b via left front and left rear link members 17a and 17b, respectively. The left front and left rear ski side arms 15a and 15b are secured to the left guide member 13b supporting the left steering ski 3 and extends forward and rearward, respectively, from the left guide member 13b. A right rear intermediate arm 16b of the intermediate arm 16 is connected to a right rear ski side arm 15c via a right rear link member 17c. The right rear ski side arm 15c is secured to the right guide member 13b supporting the right steering ski 4 and extends rearward from the right guide member 13b. The left front and right rear intermediate arms 16a and 16b, and the left rear intermediate arm 16c constitute steering intermediate arms.

A slider 18c is connected to the left front intermediate arm 16a of the intermediate arm 16 and the left rear intermediate arm 16c via front and rear link members 18a and 18b, respectively. The slider 18c is supported on a guide rod 18d constituted of a hexagonal rod for sliding movement in the vehicle width direction. The guide rod 18d is secured to the steering arm 19c.

Descriptions will be made of the operation and effects of the snow vehicle 1 of this embodiment.

The adjustment of the distance between the left and right steering skis 3 and 4 from a wide state as shown in Fig. 5 and Fig. 7 to a narrow state as shown in Fig. 6 or from the narrow state to the wide state is made during running. In the ski distance adjusting mechanism 20, the cylinder mechanism 22 is contracted from the state shown in Fig. 7. Then, the piston rod 22a rotates the driving arm 14f clockwise as shown in Fig. 7 (see the arrow "a"), whereby the upper rod members 14a are drawn inward and the left and right steering skis 3 and 4 are moved inward to a narrow position. At this time, the lower rod members 14a are slid inward in the cross pipe 21 b.

In the steering mechanism 19, when the left steering ski 3 is moved inward from the wide state shown in Fig. 5, the left front and left rear intermediate arms 16a and 16c are rotated clockwise and counterclockwise, respectively, and the slider 18c is moved rightward. Also, when the right steering ski 4 is moved inward, the right rear intermediate arm 16b is rotated clockwise. Thereby, the steering mechanism 19 is shifted to the narrow state as shown in Fig. 6.

When the steering handle 12 is turned, for example, clockwise, the steering shaft arm 19a is rotated clockwise. The rotational displacement of the steering shaft arm 19a is transmitted via the link member 19b to the steering arm 19c, and the steering arm 19c rotates the guide rod 18d clockwise. The rotation of the guide rod 18d rotates the left rear intermediate arm 16c via the rear link member 18b, and the left rear intermediate arm 16c in turn rotates the left rear ski side arm 15b clockwise via the left rear link member 17b, whereby the left steering ski 3 is rotated clockwise. At the same time, the steering intermediate arm 16 is rotated via the front link member 18a. The rotation of the steering intermediate arm 16 allows the right rear intermediate arm 16b to rotate the right rear ski side arm 15c clockwise via the right rear link member 17c, whereby the right steering ski 4 is rotated clockwise. Thereby, the snow vehicle 1 is turned to the right.

As has been described above, in this embodiment, the distance between the left and right steering skis 3 and 4 can be easily adjusted to wide or narrow. Thus, the steering mechanism not only allows a rider to enjoy sport riding but also can ensure running stability and steering stability so that the rider can travel to and from a sport course without getting exhausted. Namely, when the steering skis 3 and 4 are adjusted to the narrow state, the center of gravity is brought up relative to the width of the vehicle. Thus, the vehicle exhibits high steering response and running characteristics that requires some skills. On the other hand, when the distance between the steering skis 3 and 4 is adjusted to the wide state, the center of gravity is brought down relative to the width of the vehicle. Thus, the vehicle exhibits high running stability and steering stability, so that the rider can travel to and from a sport course without getting exhausted.

When the steering skis 3 and 4 are moved in the vehicle width direction to adjust the distance therebetween, the steering mechanism 19 absorbs the displacements of the steering skis. Namely, whether the distance between the steering skis 3 and 4 is wide or narrow as shown in Fig. 5 and Fig. 6, respectively, the steering arm 19a, the link member 19b and the steering arm 19c are kept in the same positional relation. Thus, when the steering handle 12 is rotated, the left and right steering skis 3 and 4 are rotated equally, so that the rider can steer the snow vehicle to the right and left in the same sense irrespective of the distance between the steering skis 3 and 4.

As described above, in order to provide a steering device, in particular for a snow vehicle which allows a rider to enjoy sport riding and which can improve the running stability and steering stability of the vehicle when necessary so that a rider can travel to and from a sport course without getting exhausted, a steering device is proposed, in particular to for a snow vehicle, having a pair of right and left steering skis disposed at a front part of a body frame for lateral rotation, wherein a ski distance adjusting mechanism for adjusting the distance in the vehicle width direction between the left and right steering skis and in at least two levels is provided, and a steering mechanism which can rotate the left and right steering skis and equally to the right or left in synchronization with rotational displacement of a steering handle to the right or left even when the distance between the left and right steering skis and has been adjusted by the ski distance adjusting mechanism.

## Claims

1. Snow vehicle having a pair of right and left steering skis (3,4), and a ski distance adjusting mechanism (20) for adjusting a distance between said right and left steering skis (3,4), further comprising ski side arms (15a,15b,15c) secured to supporting members (13b) for supporting said right and left steering skis (3,4), individually, for lateral rotation, a steering intermediate arm (16) connected to said ski side arms (15a,15b,15c) via link members (17a,17b,17c), **characterized by** a slider (18c) connected to said steering intermediate arm (16) via a link member (18a,18b), and a guide rod (18d) secured to a steering arm (19c) driven by a steering handle (12) for supporting said slider (18c) for movement in the axial direction of the guide rod (18d).

2. Snow vehicle according to claim 1, **characterized in that** said distance is adjustable in at least two levels, preferably to an arbitrary value.

3. Snow vehicle according to claim 1 or 2, **characterized by** further comprising a steering mechanism (19) which can rotate said right and left steering skis (3,4) equally to the right or left in synchronization with rotational displacement of a steering handle (12) at any distance between the right and left steering skis (3,4) which has been adjusted by said ski distance adjusting mechanism (20).

4. Snow vehicle according to at least one of the claims 1 to 3, **characterized in that** said ski distance adjusting mechanism (20) has a cylinder mechanism (22) for adjusting the distance between said right and left steering skis (3,4) via a bell crank mechanism (14e,14f,22a).

5. Snow vehicle according to claim 3 or 4, **characterized in that** said steering mechanism (19) absorbs the displacements of the right and left skis (3,4) adjusted by said ski distance adjusting mechanism (20) and transmits the rotational displacement of said steering handle (12) to said right and left steering skis (3,4) equally at any set distance between said steering skis (3,4).

6. Snow vehicle according to at least one of the claims 1 to 5, **characterized in that** said ski distance adjusting mechanism (20) comprises rod members (14a) secured to said right and left steering skis (3,4), individually, a driving arm (14f) rotatably disposed between said right and left steering skis (3,4) and connected to said rod members (14a) via link members (14e), and a cylinder mechanism (22) for rotating said driving arm (14f).

7. Snow vehicle according to at least one of the claims 1 to 6, **characterized in that** the left and right steering skis (3,4) are supported by left and right telescopic cushion units (13), respectively, for vertical movement and lateral steering movement, wherein each of the cushion units (13) has a cylinder (13a) secured to ends of upper and lower rod members (14a,14b) extending in a vehicle width direction.

8. Snow vehicle according to claim 7, **characterized in that** each of the upper rod members (14a) is supported by a guide pipe (21 a) for sliding movement in the direction of the width of the vehicle, and the lower rod members (14b) are inserted in a cross pipe (21 b) extending in the vehicle width direction and slidably supported by the cross pipe (21 b).

## Patentansprüche

1. Schneemobil mit einem Paar von rechtem und linkem Lenkski (3, 4) und einer Skiabstands- Einstellvorrichtung (20) zum Einstellen eines Abstandes zwischen dem rechten und linken Lenkski (3, 4), außerdem aufweisend Skiseitenarme (15a, 15b, 15c), befestigt an Lagerungsteilen (13b) zum individuellen Lagern der rechten und linken Lenkskis (3, 4) für eine seitliche Drehung, einen Lenkzwischenarm (16), verbunden mit den Skiseitenarmen (15a, 15b, 15c) über Verbindungsteile (17a, 17b, 17c), **gekennzeichnet durch** ein Gleitstück (18c), verbunden mit dem Lenkzwischenarm (16) über ein Verbindungsteil (18a, 18b), und einen Führungsstab (18d), befestigt an einem Lenkarm (19c), angetrieben **durch** einen Lenkhandgriff (12) zum Lagern des Gleitstücks (18c) für eine Bewegung in der axialen Richtung des Führungsstabes (18d).

2. Schneemobil nach Anspruch 1, **dadurch gekennzeichnet, dass** der Abstand in zumindest zwei Stufen, vorzugsweise auf einen willkürlichen Wert, einstellbar ist.

3. Schneemobil nach Anspruch 1 oder 2, **gekennzeichnet durch** außerdem aufweisend eine Lenkvorrichtung (19), die den rechten und linken Lenkski (3, 4) in gleicher Weise nach rechts oder links drehen kann, synchron mit der Drehverlagerung eines Lenkhandgriffs (12) bei jedem Abstand zwischen dem rechten und linken Ski (3, 4), der **durch** die Skiabstands- Einstellvorrichtung (20) eingestellt worden ist.

4. Schneemobil nach zumindest einem der Ansprüche 1 bis 3, **dadurch gekennzeichnet, dass** die Skiabstands- Einstellvorrichtung (20) eine Zylindervorrichtung (22) zum Einstellen des Abstandes zwischen dem rechten und linken Lenkski (3, 4) über eine Kniehebelvorrichtung (14e, 14f, 22a) hat.

5. Schneemobil nach Anspruch 3 oder 4, **dadurch gekennzeichnet, dass** die Lenkvorrichtung (19) die Verlagerungen des rechten und linken Skis (3, 4), eingestellt durch die Skiabstands- Einstellvorrichtung (20), absorbiert und die Drehverlagerung des Lenkhandgriffs (12) auf den rechten und linken Lenkski (3, 4) in gleicher Weise bei jedem festgelegten Abstand zwischen den Lenkskis (3, 4) überträgt.

6. Schneemobil nach zumindest einem der Ansprüche 1 bis 5, **dadurch gekennzeichnet, dass** die Skiabstands- Einstellvorrichtung (20) aufweist Stabteile (14a), individuell befestigt an dem rechten und linken Lenkski (3, 4), einen Antriebsarm (14f), drehbar angeordnet zwischen dem rechten und linken Lenkski (3, 4) und mit den Stabteilen (14a) über Verbindungsteile (14e) verbunden, und eine Zylindervorrichtung (22) zum Drehen des Antriebsarms (14f).

7. Schneemobil nach zumindest einem der Ansprüche 1 bis 6, **dadurch gekennzeichnet, dass** der rechte und linke Lenkskis (3, 4) jeweils durch linke und rechte Teleskop- Dämpfungseinheiten (13) für eine vertikale Bewegung und eine seitliche Lenkbewegung gelagert sind, wobei jede der Dämpfungseinheiten (13) einen Zylinder (13a) hat, gelagert an den Enden von oberen und unteren Stabteilen (14a, 14b), die sich in einer Richtung einer Fahrzeugbreite erstrecken.

8. Schneemobil nach Anspruch 7, **dadurch gekennzeichnet, dass** jedes der oberen Stabteile (14a) durch ein Führungsrohr (21 a) für eine Gleitbewegung in der Richtung der Breite des Fahrzeuges gelagert ist und die unteren Stabteile (14b) in ein Querrohr (21 b) eingesetzt sind, das sich in der Richtung der Fahrzeugbreite erstreckt und gleitbar durch das Querrohr (21 b) gelagert ist.

## Revendications

1. Véhicule des neiges comprenant une paire de skis directionnels droit et gauche (3, 4), et un mécanisme de réglage de distance entre skis (20) destiné à régler une distance entre lesdits skis directionnels droit et gauche (3, 4), comprenant en outre des bras latéraux de ski (15a, 15b, 15c) fixés sur des éléments de support (13b) destinés à supporter lesdits skis directionnels droit et gauche (3, 4) individuellement pour une rotation latérale, un bras de direction intermédiaire (16) connecté aux dits bras latéraux de ski (15a, 15b, 15c) par l'intermédiaire d'éléments de connexion (17a, 17b, 17c), **caractérisé par** un élément coulissant (18c) connecté audit bras de direction intermédiaire (16) par l'intermédiaire d'un élément de connexion (18a, 18b), et par une tige de guidage (18d) fixée sur un bras de direction (19c) entraîné par un guidon (12) de manière à supporter ledit élément coulissant (18c) afin qu'il se déplace dans la direction axiale de la tige de guidage (18d).

2. Véhicule des neiges selon la revendication 1, **caractérisé en ce que** ladite distance est réglable sur au moins deux niveaux, de préférence selon une valeur arbitraire.

3. Véhicule des neiges selon la revendication 1 ou la revendication 2, **caractérisé en qu'**il comprend en outre un mécanisme de direction (19) qui peut faire tourner lesdits skis directionnels droit et gauche (3, 4) de la même manière vers la droite ou vers la gauche en synchronisation avec un déplacement en rotation d'un guidon (12) sur toute distance existant entre les skis directionnels droit et gauche (3, 4) qui a été réglée par ledit mécanisme de réglage de distance entre skis (20).

4. Véhicule des neiges selon au moins l'une des revendications 1 à 3, **caractérisé en ce que** ledit mécanisme de réglage de distance entre skis (20) comprend un mécanisme à vérin (22) destiné à régler la distance existant entre lesdits skis directionnels droit et gauche (3, 4) par l'intermédiaire d'un mécanisme à levier coudé (14e, 14f, 22a).

5. Véhicule des neiges selon la revendication 3 ou la revendication 4, **caractérisé en ce que** ledit mécanisme de direction (19) amortit les déplacements des skis droit et gauche (3, 4) réglés par ledit mécanisme de réglage de distance entre skis (20) et transmet le déplacement en rotation dudit guidon (12) sur lesdits skis directionnels droit et gauche (3, 4) de la même manière sur toute distance de réglage existant entre lesdits skis directionnels (3, 4).

6. Véhicule des neiges selon au moins l'une des revendications 1 à 5, **caractérisé en ce que** ledit mécanisme de réglage de distance entre les skis (20) comprend des éléments de tige (14a) fixés individuellement sur lesdits skis directionnels droit et gauche (3, 4), un bras d'entraînement (14f) disposé en rotation entre lesdits skis directionnels droit et gauche (3, 4) et connecté aux dits éléments de tige (14a) par l'intermédiaire des éléments de connexion (14e), et un mécanisme à vérin (22) destiné à faire tourner ledit bras d'entraînement (14f).

7. Véhicule des neiges selon au moins l'une des revendications 1 à 6, **caractérisé en ce que** les skis directionnels gauche et droit (3, 4) sont respectivement supportés par des ensembles d'amortissement de choc télescopiques gauche et droit (13) à des fins de déplacement vertical et de déplacement directionnel latéral, dans lequel chacun des ensembles d'amortissement de choc (13) comprend un vérin (13a) fixé à des extrémités des éléments de tige supérieur et inférieur (14a, 14b) qui s'étendent dans la direction de la largeur du véhicule.

8. Véhicule des neiges selon la revendication 7, **caractérisé en ce que** chacun des éléments supérieurs de tige (14a) est supporté par un tube de guidage (21a) afin qu'il se déplace en coulissement dans la direction de la largeur du véhicule, et **en ce que** les éléments de tige inférieurs (14b) sont introduits dans un tube transversal (21b) qui s'étend dans la direction de la largeur du véhicule et qui sont supportés en coulissement par le tube transversal (21b).
